# EUROPÄISCHE PATENTANMELDUNG

(11) **EP 1 106 674 A1**
(43) Veröffentlichungstag der Anmeldung: **13.06.2001**
(21) Anmeldenummer: 00124961.4
(22) Anmeldetag: 16.11.2000
(51) Int. Cl.: C10L 5/46

(54) **Verfahren zum Herstellen von Ersatzbrennstoffen**

(30) Priorität: 30.11.1999 DE 19957521
(71) Anmelder: Stadler Anlagenbau GmbH, 88361 Althausen (DE)
(72) Erfinder: Stadler, Willi, 88361 Altshause (DE)
(74) Vertreter: Weiss, Peter, Dr. rer. nat.

(57) **Zusammenfassung**

Bei einem Verfahren zur Herstellung von Ersatzbrennstoffen, aus einem gemischten Abfallstrom (1), aus einer Mehrzahl von heizwertreichen unterschiedlichen Fraktionen, soll zur Herstellung eines definierten Ersatzbrennstoffes mit bestimmbarem und wählbarem Brennwert der Abfallstrom (1) ir einzelne Monofraktionen (2) separiert werden.

## Beschreibung

Die vorliegende Erfindung betrifft ein Verfahren zur Herstellung von Ersatzbrennstoffen, aus einem gemischten Abfallstrom, aus einer Mehrzahl von heizwertreichen unterschiedlichen Fraktionen.

Bei den herkömmlichen Verfahren zum Herstellen von Ersatzbrennstoffen werden diese bspw. aus heizwertreichen Kunststoffabfällen beliebiger Zusammensetzung als sekundäre Energieträger einem Primärenergieträger zugeführt.

Die herkömmlichen Ersatzbrennstoffanteile betragen max. 20%, weshalb sehr hohe Anteile an Primärenergieträger zur Feuerung notwendig sind. Hierzu dient bspw. Kohlenstaub welcher zwischengebunkert werden muss, um als Trägerfeuerung zu dienen. Insbesondere das Zwischenbunkern und Vermahlen von Kohle als primärer Energieträger zur Unterstützung einer Trägerfeuerung für Ersatzbrennstoffe ist durch das aufwendige Handling sehr kostenintensiv.

Ferner ist nachteilig, dass herkömmliche Ersatzbrennstoffe unterschiedliche Brennwerte und Schadstoffwerte besitzen, die es einer herkömmlichen Trägerfeuerung nicht gestatten eine permanente kontinuierliche Temperatur beizubehalten.

Hierdurch ist die Einsatzmöglichkeit des herkömmlichen Ersatzbrennstoffes sehr begrenzt.

Der vorliegenden Erfindung liegt die Aufgabe zugrunde ein Verfahren zum Herstellen von Ersatzbrennstoffen zu schaffen, mit welchem insbesondere Ersatzbrennstoffe hergestellt werden können, die wesentlich universeller einzusetzen sind, und mit kostengünstigeren Trägerfeuerungen oder primären Brennstoffen wie bspw. Öl oder Gas verbrannt werden können. Zudem sollen Brennwert und Schadstoffwerte konstant gehalten werden können.

Zur Lösung dieser Aufgabe führt, dass zur Herstellung eines definierten Ersatzbrennstoffes mit bestimmbarem und wählbarem Brennwert der Abfallstrom in einzelne Monofraktionen separiert wird.

Bei der vorliegenden Erfindung werden aus einem beliebigen Abfallstrom kalorisch nutzbare Bestandteile separiert, wie bspw. PP, PS, ABS, PE, HDPE od. dgl. sowie auch PU, Zellstoffe und viele mehr. Diese Bestandteile, die insbesondere brennbaren und kalorischen Charakter haben, werden in einzelne Monofraktionen entsprechend nach Brennwert und/oder nach Schadstoffgehalt sortiert.

Vor der Separierung kann der Abfallstrom einer oder mehreren Zerkleinerungsstufen unterzogen werden.

Dabei liegt auch im Rahmen der vorliegenden Erfindung nach der Separierung des Abfallstromes in einzelne Monofraktionen diese separat nochmals einer oder mehreren Zerkleinerungsstufen zuzuführen um ggf. die Monofraktionen weiter zu zerkleinern.

Um einen gewünschten Ersatzbrennstoff mit einem exakt bestimmbaren Brennwert und/oder Schadstoffanteil zu erhalten können die einzelnen Monofraktionen in unterschiedlichen und bestimmbaren Mengen zum gewünschten Ersatzbrennstoff zusammengeführt insbesondere zusammen vermischt werden.

Aus diesem definierten Gemisch aus einer wählbaren Anzahl von Monofraktionen, wobei die einzelnen Fraktionen in bestimmbaren und wählbaren Mengenverhältnissen miteinander vermischt werden, entsteht ein Ersatzbrennstoff, der einen ganz bestimmten und bestimmbaren Heizwert und/oder Schadstoffwert besitzt.

Dieser Ersatzbrennstoff kann bspw. durch Agglomerierung und/oder Konditionierung bspw. zu Pelletes oder Fluffs weiterverarbeitet werden.

Wichtig bei der vorliegenden Erfindung ist auch, dass ein Ersatzbrennstoff entsteht, der im wesentlichen durchgehend homogen aus einzelnen Bestandteilen zusammengesetzter Monofraktionen besteht, so dass nicht permanent bei der Zuführung von Ersatzbrennstoffen zur Primärfeuerung ein kontinuierlicher Brennwert und ein konstanter Abgasgehalt einstellt, damit eine Primärfeuerung, die teilweise schlecht zu regeln ist, zusammen mit dem Ersatzbrennstoff immer einen gewünschten und eingestellten Brennwert konstant beibehält.

Dies ist bspw. bei der Herstellung von Zement in Zementöfen sehr wichtig, da die Temperatur beim Feuerungsvorgang auf einem konstanten Wert gehalten werden muss.

Hierzu muss sichergestellt werden, dass bspw. der Ersatzbrennstoff permanent und homogen mit homogenen, konstanten Materialeigenschaften, Brennwerten und Abgaswerten über einen langen Zeitraum der Feuerung zur Verfügung steht.

Zudem ist durch die Erhöhung des Brennwertes, insbesondere durch eine bestimmbare Zusammenführung einzelner Monofraktionen zu einem Ersatzbrennstoff mit einem bestimmbaren Brennwert der Ersatzbrennstoffanteil wesentlich höher als herkömmlich. Hierdurch können primär Brennstoffe eingespart werden, die wesentlich teurer sind.

Weitere Vorteile, Merkmale und Einzelheiten der Erfindung ergeben sich aus der nachfolgenden Beschreibung bevorzugter Ausführungsbeispiele, sowie anhand der Zeichnung; diese zeigt in
Figur 1 ein schematisch dargestelltes Ablaufschema eines Verfahrens zum Herstellen von Ersatzbrennstoffen;
Figur 2 ein schematisch dargestelltes Ablaufschema eines Verfahrens zum Herstellen von Ersatzbrennstoffen als weiteres Ausführungsbeispiel.

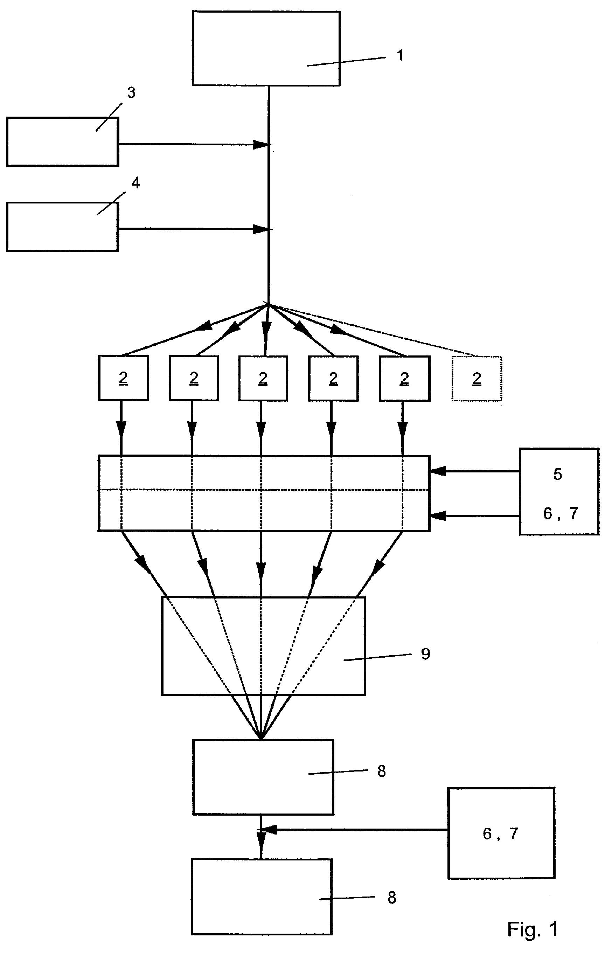

Gemäss Figur 1 wird ein gemischter Abfallstrom 1 durch herkömmliche Aufbereitung und Trennverfahren aus bspw. verschiedensten Kunststoffen, Spuckstoffen der Papierindustrie, Zellstoffen, Teppichresten und vielen anderen kalorischen Brennstoffen in verschiedene Monofraktionen 2 separiert bzw. getrennt.

Das Trennen bzw. Separieren kann insbesondere Material und/oder Brennwert und/oder schadstoffspezifisch geschehen. Bspw. können unterschiedliche Kunststoffe mit etwa konstantem und gleichem Brennwert einer Monofraktion 2 zugeführt werden.

Durch die Separierung des Abfallstromes 1 in verschiedene Monofraktionen 2 werden einzelnen Fraktionen gebildet, die unterschiedliche Brennwerte und/oder Schadstoffwerte besitzen.

Vor einer entsprechenden Separierung kann der Abfallstrom 1, wie es in Figur 1 angedeutet ist, einer oder mehreren Zerkleinerungsstufen 3, 4, zugeführt werden, wobei die Zerkleinerungsstufen 3, 4 auch Fein- oder Feinstzerkleinerungsstufen sein können.

Dabei sei auch vom vorliegenden Erfindungsgedanken umfasst, die einzelnen Monofraktionen 2 nach der Separierung aus dem Abfallstrom 1 einer oder mehreren Zerkleinerungsstufen 5 zuzuführen.

Ferner können die einzelnen Monofraktionen 2 separat einer Konditionierung 6, insbesondere Agglomerierung 7 zugeführt werden, damit die einzelnen Monofraktionen 2, insbesondere deren Bestandteile einen lockeren Verbund bei einer grösseren oder insbesondere vergrösserten Oberfläche bilden. Zusätzlich wird die Rieselfähigkeit der einzelnen Monofraktionen 2 erheblich verbessert.

Die Zerkleinerungsstufen 5 sowie die entsprechende Konditionierung 6 sowie Agglomerierung 7 sind nicht zwingend erforderlich. Diese können auch noch später erfolgen.

Wichtig bei der vorliegenden Erfindung ist ferner, dass zur Herstellung eines brennwertspezifischen und insbesondere brennwertkonstanten sowie auch schadstoffkonstanten Ersatzbrennstoffes 8 die ggf. durch die Zerkleinerungsstufen 5 sowie Konditionierung 6 und Agglomerierung 7 behandelte Monofraktionen 2 durch eine definierte Zusammenführung 9, insbesondere durch ein Mischen in wählbaren Mengen, hergestellt wird.

Dabei erhält der Ersatzbrennstoff 8 durch insbesondere homogenes Vermischen der einzelnen Monofraktionen 2 einen bestimmenbaren exakt homogenen Brennwert, wobei auch sein Schadstoffwert exakt bestimmbar ist.

Gegebenenfalls kann der Ersatzbrennstoff 8 nach dem Zusammenführen 9 durch entsprechende Konditionierungen 6, insbesondere Agglomerierungen 7 nochmals behandelt werden.

Auf diese Weise kann durch die entsprechende Herstellung des Ersatzbrennstoffes 8 insbesondere bei einer chargenund produktionsortabhängigen Zuführung von Energie und Zuführung von Ersatzbrennstoffen 8 der Anteil an Ersatzbrennstoffen 8 wesentlich gesteigert werden.

Ferner kann durch die Steigerung, insbesondere durch die homogene Zusammensetzung des Ersatzbrennstoffes 8 der primäre Energieträgeranteil reduziert werden, um dennoch eine permanente und homogene Energiegewinnung zu erzielen. Dabei hat sich als besonders vorteilhaft erwiesen, den Ersatzbrennstoff bezüglich seines konstanten Brennwertes und seines konstanten Schadstoffanteils universell einzusetzen. Insbesondere die Bestimmbarkeit des Ersatzbrennstoffes, gewährleistet einen gleichbleibenden Heizwert mit einer festzulegenden Toleranz.

Die Separierung der einzelnen Monofraktionen 2 aus einem beliebigen Abfallstrom 1 kann in marktüblichen Separationseinrichtungen, wie bspw. Autosort, MSS od. dgl. erfolgen, wobei die kalorisch nutzbaren Bestandteile aus den einzelnen Monofraktionen 2 aussortiert werden. Ein weitere Vorteil ist, dass sich ein derartig homogen zusammengesetzter Ersatzbrennstoff 8 auch sehr gut bunkern lässt, ohne dass sich das homogene Gemisch in seiner Zusammensetzung verändert, insbesondere wenn permanent auf eine lange Zeit gesehen bei der Feuerung ein konstanter Brennwert erforderlich ist.

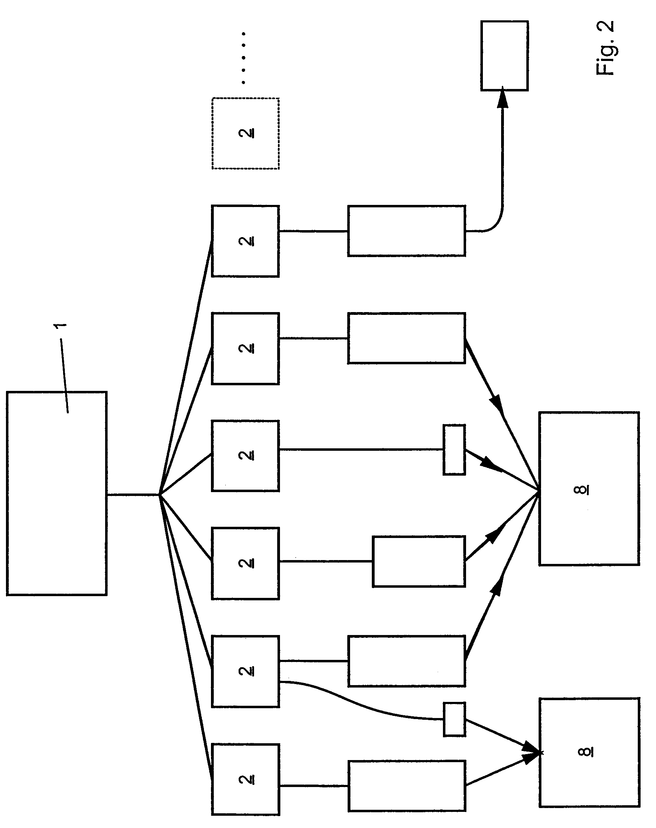

In dem Ausführungsbeispiel gemäss Figur 2 wird in oben beschriebener Weise der Abfallstrom 1 in eine Mehrzahl von Monofraktionen 2 separiert, wobei ggf. in oben beschriebener Weise und hier nicht dargestellt, der Abfallstrom 1 entsprechenden Zerkleinerungsstufen zugeführt wird. Dabei können zur Herstellung unterschiedlicher Ersatzbrennstoffe 8 mit unterschiedlichen Brennwertund/oder Schadstoffeigenschaften unterschiedliche Monofraktionen 2 in unterschiedlichen Mengen, wie sie entsprechend Grössen mässig dargestellt sind, zusammengeführt bzw. zusammengemischt werden.

Die Zusammenstellung der einzelnen Monofraktionen 2 erfolgt individuell je nach Anforderungen des Ersatzbrennstoffes 8 betreffend seines Brennwertes, seines Schadstoffgehaltes, und/oder seiner Rieselfähigkeit.

Auch lassen sich aus dem Ersatzbrennstoff 8 durch entsprechendes Agglomerieren und Konditonieren sogenannte Pelletes oder Fluffs herstellen. Diese lassen sich auf herkömmliche Weise sehr leicht und einfach zu den Primärenergieträgern beimischen.

| Positionszahlenliste | | | | | |
|---|---|---|---|---|---|
| 1 | Abfallstrom | 34 | | 67 | |
| 2 | Monofraktion | 35 | | 68 | |
| 3 | Zerkleinerungsstufen | 36 | | 69 | |
| 4 | Zerkleinerungsstufen | 37 | | 70 | |
| 5 | Zerkleinerungsstufen | 38 | | 71 | |
| 6 | Konditionierung | 39 | | 72 | |
| 7 | Agglomerierung | 40 | | 73 | |
| 8 | Ersatzbrennstoff | 41 | | 74 | |
| 9 | Zusammenführung | 42 | | 75 | |
| 10 | | 43 | | 76 | |
| 11 | | 44 | | 77 | |
| 12 | | 45 | | 78 | |
| 13 | | 46 | | 79 | |
| 14 | | 47 | | | |
| 15 | | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zur Herstellung von Ersatzbrennstoffen, aus einem gemischten Abfallstrom (1), aus einer Mehrzahl von heizwertreichen unterschiedlichen Fraktionen,
dadurch gekennzeichnet,
dass zur Herstellung eines definierten Ersatzbrennstoffes (8) mit bestimmbarem und wählbarem Brennwert der Abfallstrom (1) in einzelne Monofraktionen (2) separiert wird.

2. Verfahren nach Anspruch 1, dadurch gekennzeichnet, dass die einzelnen Monofraktionen (2) in jeweils gleiche material- oder brennwertespezifische Fraktionen separiert werden.

3. Verfahren nach Anspruch 1 oder 2, dadurch gekennzeichnet, dass vor und/oder nach dem Separieren des Abfallstromes (1) dieser oder die separierten einzelnen Monofraktionen (2) zerkleinert, ggf. fein- oder feinstzerkleinert werden.

4. Verfahren nach Anspruch 2 oder 3, dadurch gekennzeichnet, dass die einzelnen Monofraktionen (2) jeweils unterschiedlich zerkleinert oder ggf. feinzerkleinert werden.

5. Verfahren nach wenigstens einem der Ansprüche 2 bis 4, dadurch gekennzeichnet, dass die einzelnen Monofraktionen (2) in ggf. unterschiedlichen Zerkleinerungstufen (5) zerkleinert werden.

6. Verfahren nach wenigstens einem der Ansprüche 2 bis 5, dadurch gekennzeichnet, dass die einzelnen Monofraktionen (2), brennwert- und/oder schadstoffspezifisch in unterschiedliche Korngrössen zerkleinert bis feinzerkleinert werden.

7. Verfahren nach wenigstens einem der Ansprüche 1 bis 6, dadurch gekennzeichnet, dass die Monofraktionen (2) durch Konditionierung (6), insbesondere durch Agglomerierung (7) zur rieselfähigen und/oder dosierbaren Monofraktion (2) behandelt werden.

8. Verfahren nach wenigstens einem der Ansprüche 1 bis 7, dadurch gekennzeichnet, dass die einzelnen Monofraktionen (2) zu Pellets und/oder Fluffs geformt werden.

9. Verfahren nach wenigstens einem der Ansprüche 1 bis 8, dadurch gekennzeichnet, dass die einzelnen separierten Monofraktionen (2) zur Erzeugung eines definierten brennwert- und/oder schadstoffspezifischen Ersatzbrennstoffes (8) zusammengeführt werden.

10. Verfahren nach wenigstens einem der Ansprüche 1 bis 9, dadurch gekennzeichnet, dass die separierten Monofraktionen (2) zu einem brennwert- und/oder schadstoffspezifischen Ersatzbrennstoff (8) homogener Zusammensetzung gemischt werden.

11. Verfahren nach wenigstens einem der Ansprüche 1 bis 10, dadurch gekennzeichnet, dass die separierten Monofraktionen (2) entsprechend einem erforderlichen Brennwert und/oder Schadstoffgehalt gemischt werden.

12. Verfahren nach wenigstens einem der Ansprüche 1 bis 11, dadurch gekennzeichnet, dass zum Herstellen eines Ersatzbrennstoffes (8) von einem bestimmten Brennwert unterschiedliche Monofraktionen (2) in ggf. unterschiedlichen Mischungsverhältnissen und ggf. sich ändernden Mischungsverhältnissen zusammengeführt oder gemischt werden.

13. Verfahren nach wenigstens einem der Ansprüche 1 bis 12, dadurch gekennzeichnet, dass nach dem Zusammenführen einzelner Monofraktionen (2) zu einem Ersatzbrennstoff (8) dieser durch Konditionieren oder Agglomerieren behandelt wird.

14. Verfahren nach wenigstens einem der Ansprüche 1 bis 13, dadurch gekennzeichnet, dass nach dem Separieren der einzelnen Monofraktionen (2) ein Teil der separierten Monofraktionen (2) im bestimmbaren Mischungsverhältnissen zu einen und/oder mehreren unterschiedlichen Ersatzbrennstoffen (8) zusammengeführt oder gemischt werden.
